# DEMANDE DE BREVET EUROPEEN

(11) **EP 1 520 459 A1**
(43) Date de publication de la demande: **06.04.2005**
(21) Numéro de dépôt: 03020059.6
(22) Date de dépôt: 04.09.2003
(51) Int. Cl.: A01B 3/46, A01B 15/00, A01B 63/22

(54) **Dispositif de fixation d'une roue de terrage et de transport pour charrue réversible**

(71) Demandeur: NAUD, 49600 Andrèze (FR)
(72) Inventeur: Germond, François, 49110 Chaudron en Mauges (FR)
(74) Mandataire: Arbousse-Bastide, Jean-Claude Philippe

(57) **Abrégé**

Dispositif de fixation d'une roue (1) de terrage et de transport pour charrue réversible du type comprenant un bras de roue (10) solidarisé au châssis tournant (2) de la charrue, ladite roue (1) étant portée en bascule par ledit châssis (2) au moyen d'un support (11) articulé sur ledit châssis (2) autour d'un arbre (12) perpendiculaire au châssis (2).

Le support (11) comporte une butée (30) solidaire dudit support (11) et destinée à recevoir une poussée d'un moyen de poussée (3), parallèlement à l'axe longitudinal du châssis, de manière à faire pivoter ledit support (11) du bras de roue (10) autour de l'arbre (12) pour amener la roue (1) vers l'arrière et en ce qu'un moyen de butée (13,13') solidarisé au châssis (2) limite la course vers l'arrière de ladite roue (1).

## Description

La présente invention a pour objet un dispositif de fixation d'une roue de terrage et de transport pour charrue réversible.

On connaît dans le domaine du charruage des charrues tractées ou poussées à socs fixes réversibles composées d'un châssis équipé de moyens de solidarisation au tracteur, de deux rampes d'outils de travail au sol et d'une roue de terrage et de transport. Le châssis est également monté pivotant autour de son axe longitudinal pour placer en alternance lesdites rampes en position de travail selon la situation à droite ou à gauche des rampes par rapport à l'axe longitudinal du châssis parallèle au sens de progression du tracteur.

Un des problèmes rencontré lors du retournement du châssis par pivotement autour de son axe et de la mise au sol de la roue est de positionner cette dernière vers l'arrière c'est à dire dans le sens inverse du sens de déplacement du tracteur.

Une solution utilisée actuellement consiste à équiper le bras de roue d'un fer plat articulé qui rentre dans le sol et arrive sur une butée entraînant ladite roue vers l'arrière.

Toutefois cette solution, du fait de problèmes de fonctionnement, ne permet pas de positionner la roue vers l'arrière à chaque opération de mise au sol de cette dernière.

La présente invention a pour but de remédier à ces inconvénients en proposant un dispositif de positionnement de la roue vers l'arrière plus fiable que les systèmes existants.

Le dispositif de fixation d'une roue de terrage et de transport pour une charrue réversible selon la présente invention est du type comprenant un bras de roue solidarisé au châssis tournant de la charrue, ladite roue étant portée en bascule par ledit châssis au moyen d'un support articulé sur ledit châssis autour d'un arbre perpendiculaire au châssis et se caractérise essentiellement en ce que ledit support comporte une butée d'entraînement destinée à recevoir une poussée d'un moyen de poussée parallèlement à l'axe longitudinal du châssis de manière à faire pivoter le support du bras de roue autour de l'arbre pour amener la roue vers l'arrière et en ce qu'un moyen de butée solidarisé au châssis limitant la course vers l'arrière de ladite roue.

Dans un mode de réalisation préférentiel de la présente invention le moyen de poussée est un vérin hydraulique d'axe sensiblement parallèle à l'axe longitudinal du châssis, solidarisé à ce dernier pour une charrue poussée entre le support du bras de roue et l'extrémité du châssis destinée à être solidarisée au tracteur. Par ailleurs, la tige du vérin est équipée à son extrémité libre d'une pièce de contact destinée à exercer une poussée sur la butée d'entraînement, lors de la sortie de la tige dans le sens de déplacement du tracteur, ce qui a pour effet de faire pivoter ledit support autour de l'arbre et d'amener le bras de roue et partant la roue vers l'arrière.

La pièce de contact sera de préférence une pièce en forme de U située dans un plan sensiblement parallèle au bras de roue, le contact entre ladite pièce et la butée étant effectué par l'extrémité de la branche du U la plus haute tandis qu'un espace est prévu dans le support du bras de roue pour le passage de l'extrémité de la branche inférieure du U lors de la sortie de la tige du vérin.

Les avantages et les caractéristiques de la présente invention ressortiront plus clairement de la description qui suit et qui se rapporte au dessin annexé, lequel en représente un mode de réalisation non limitatif.
- la figure 1a représente une vue en perspective du dispositif de fixation d'une roue au châssis d'une charrue poussée selon la présente invention en position sortie de la tige du vérin
- la figure 1b représente une vue en perspective du dispositif selon la présente invention en position de rentrée de la tige du vérin
- la figure 2a représente une vue de profil du dispositif selon la présente invention en position de sortie intermédiaire de la tige du vérin positionnant la roue vers l'arrière
- la figure 2b représente une vue de profil du dispositif selon la présente invention en position de sortie de la tige du vérin avec le bras de roue en appui sur la butée
- la figure 2c représente une vue en perspective du dispositif selon la présente invention en position de rentrée de la tige du vérin, le bras de roue étant libre en rotation

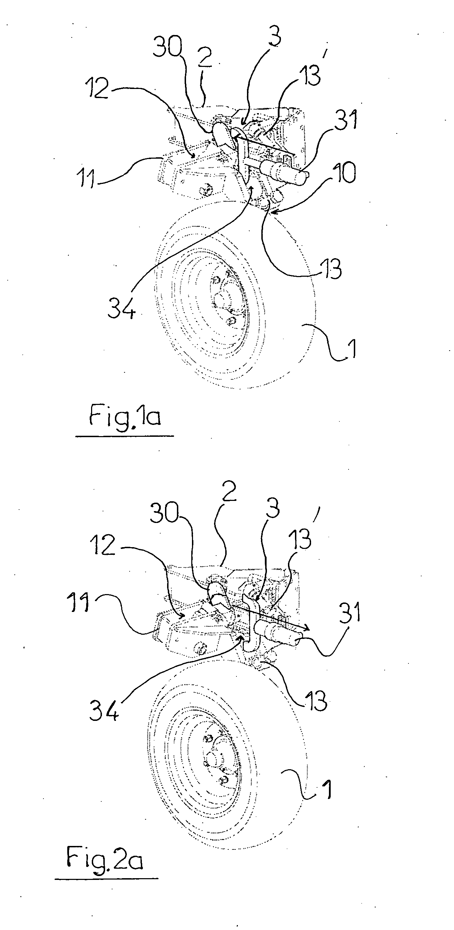

Si on se réfère à la figure 1a, à la figure 1b et à la figure 1c, on peut voir que le dispositif de fixation d'une roue de terrage 1 au châssis 2 d'une charrue réversible poussée comprend d'une part un bras de roue 10 solidarisé au châssis 2 par l'intermédiaire d'un support tournant 11 monté pivotant autour d'un arbre 12 solidarisé au châssis 2 perpendiculairement à ce dernier et d'autre part un système de positionnement 3 de la roue 1 vers l'arrière lors de sa mise au sol.

Le système de positionnement 3 est constitué d'une butée 30, d'axe parallèle au bras de roue 10, solidarisée au support tournant 11 et un vérin hydraulique 31 solidarisé au châssis 2 parallèlement à l'axe longitudinal de ce dernier, dont l'extrémité de la tige 32 est équipée d'une pièce de contact 33 destinée à exercer une poussée sur la butée 30, parallèlement à l'axe longitudinal du châssis 2 dans le même sens que le sens de déplacement du véhicule tracteur, ce qui a pour effet de faire pivoter le support tournant 11 autour de l'arbre 12 dans le sens inverse des aiguilles d'une montre et d'amener le bras de roue 10 et partant la roue 1 vers l'arrière c'est-à-dire dans le sens opposé au sens de déplacement T du tracteur.

La pièce de contact 3 présente une forme en U et est positionnée dans un plan vertical parallèle au bras de roue 10, l'extrémité de la branche supérieure du U étant destinée à venir au contact de la butée 30 tandis qu'un espace 34 est prévu dans le support 11 du bras de roue 10 pour le passage de la branche inférieure du U lors de la sortie de la tige 32 du vérin 31.

On peut voir également que le bras de roue 10 vient, lors de son positionnement vers l'arrière, contre une butée d'inclinaison 13,13' afin de limiter sa course vers l'arrière.

De manière à permettre un fonctionnement dans les deux positions de retournement du châssis, deux butées 13, 13' sont solidarisées au châssis de part et d'autre de l'axe du vérin 31.

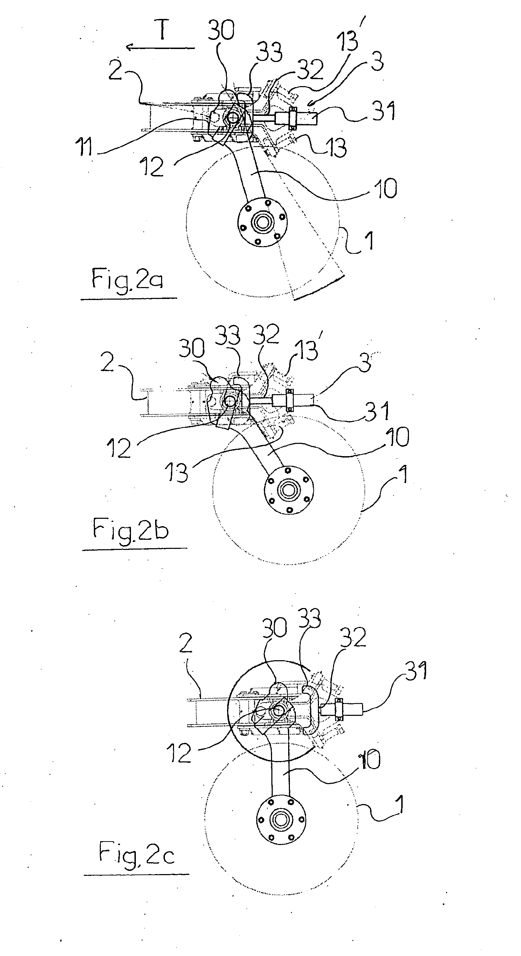

La figure 2a montre le vérin 31 en phase de sortie de sa tige 32 avec son extrémité 33 qui est en contact avec la butée d'entraînement 30 exerçant une poussée sur cette dernière dans le sens de T entraînant le bras de roue en rotation vers l'arrière comme on peut le voir sur la figure 2b où ce dernier est en appui sur la butée inférieure 13, la roue 1 étant alors positionnée correctement en arrière afin de permettre une bonne conduite de travail.

La libération totale de la roue en pivotement autour de l'arbre 12 est effectuée lors de la rentrée de la tige du vérin 31 comme on peut le voir sur la figure 2c.

On comprendra aisément que dans le cas d'une charrue tractée le vérin hydraulique 31 sera solidarisé au châssis 2 entre le support 11 et l'extrémité libre du châssis 2, la tige 32 du vérin 31 sortant alors vers le tracteur pour venir au contact de la butée d'entraînement 30.

## Revendications

1. Dispositif de fixation d'une roue (1) de terrage et de transport pour charrue réversible du type comprenant un bras de roue (10) solidarisé au châssis tournant (2) de la charrue, ladite roue (1) étant portée en bascule par ledit châssis (2) au moyen d'un support (11) articulé sur ledit châssis (2) autour d'un arbre (12) perpendiculaire au châssis (2) **caractérisé en ce que** ledit support (11) comporte une butée (30) solidaire dudit support (11) et destinée à recevoir une poussée d'un moyen de poussée (3), parallèlement à l'axe longitudinal du châssis, de manière à faire pivoter ledit support (11) du bras de roue (10) autour de l'arbre (12) pour amener la roue (1) vers l'arrière et **en ce qu'**un moyen de butée (13,13') solidarisé au châssis (2) limite la course vers l'arrière de ladite roue (1).

2. Dispositif de fixation d'une roue (1) de terrage et de transport au châssis (2) d'une charrue réversible selon la revendication 1 **caractérisé en ce que** le moyen de poussée (3) est un vérin hydraulique (31), d'axe sensiblement parallèle à l'axe longitudinal du châssis (2), dont la tige (32) est équipée à son extrémité libre d'une pièce de contact (33) destinée à exercer une poussée sur la butée d'entraînement (30), lors de la sortie de la tige (32) dans le sens de déplacement du tracteur, ce qui a pour effet de faire pivoter le support (11) autour de l'arbre (12) et d'amener le bras de roue (10) vers l'arrière.

3. Dispositif de fixation d'une roue de terrage et de transport au châssis (2) d'une charrue réversible selon la revendication 2 **caractérisé en ce que** la pièce de contact est une pièce en forme de U situé dans un plan sensiblement parallèle au bras de roue (12) et **en ce que** le contact entre ladite pièce (33) et la butée d'entraînement (30) est effectué par l'extrémité de la branche du U la plus haute.

4. Dispositif de fixation d'une roue de terrage et de transport au châssis (2) d'une charrue réversible selon l'une quelconque des revendications 2 ou 3 **caractérisé en ce que** de manière à permettre un fonctionnement dans les deux positions de retournement du châssis (2) deux butées (13,13'), destinées chacune à limiter la course vers l'arrière du bras de roue (10), sont solidarisées au châssis (2) de part et d'autre de l'axe du vérin (31).
